# EUROPÄISCHE PATENTSCHRIFT

(11) **EP 4 105 587 B1**
(45) Veröffentlichungstag und Bekanntmachung des Hinweises auf die Patenterteilung: **18.09.2024**
(21) Anmeldenummer: 22176972.2
(22) Anmeldetag: 02.06.2022
(51) Int. Cl.: F28F 1/06

(54) **ROHR ZUM TRANSPORT EINES WÄRMETRAGENDEN FLUIDES**
PIPE FOR TRANSPORTING A HEAT CARRYING FLUID
TUBE DE TRANSPORT D'UN FLUIDE CALOPORTEUR

(30) Priorität: 16.06.2021 CH 7002021
(43) Veröffentlichungstag der Anmeldung: 21.12.2022
(73) Patentinhaber: Zehnder Group International AG, 5722 Gränichen (CH)
(72) Erfinder: Klug, Peter, 77933 Lahr (DE)
(74) Vertreter: Rentsch Partner AG

(56) Entgegenhaltungen:
- EP-A1- 1 391 674
- DE-A1- 10 238 086
- DE-A1- 19 731 190
- DE-C5- 102010 018 162

## Beschreibung

### Technisches Gebiet

Die vorliegende Erfindung bezieht sich auf das Gebiet der Heiz- und Kühltechnik von Gebäuden und betrifft ein Rohr für den Transport eines wärmetragenden Fluides, ein Wärmeaustauschelement umfassend ein derartiges Rohr und ein Herstellungsverfahren eines derartigen Wärmeaustauschelements.

### Stand der Technik

Wärmeaustauschelemente zur Übertragung von Wärme zwischen dem Innenbereich eines Gebäudes und einem wärmetragenden Fluid sind aus dem Stand derTechnik bekannt. Hierbei werden typischerweise Rohrregister an einer Strahlplatte, bzw. einer Trägerkassette, befestigt. Indem ein wärmetragendes Fluid durch das Rohrregister strömt, kann Wärmeenergie zwischen dem Innenbereich und dem Fluid über die Strahlplatte und das Rohrregister ausgetauscht werden.

Um die Effizienz des Wärmeaustauschs zu verbessern, werden dabei häufig mäanderförmige Rohre eingesetzt. Diese können mit Wärmeleitblechen, oder alternativ mit Wärmeleitfolien, an der Strahlplatte befestigt werden. Da die Wärmeleitbleche inhärent wärmeleitend ausgestaltet sind und sowohl mit der Strahlplatte als auch mit dem Rohr in direktem Kontakt stehen, wird dadurch die Effizienz des Wärmeaustauschs verbessert. Des Weiteren ist es bekannt, anstelle von gängigen kreisrunden Rundrohren Rohre einzusetzen, welche entlang ihres Umfangs zumindest in einem Teilbereich eine abgeflachte und damit ebenflächige Kontur aufweisen. Hierdurch entsteht eine grossflächige Ebene, welche flächig in direkten Kontakt mit der Strahlplatte gebracht wird Solche Rohre werden aufgrund ihrer Umfangskontur auch als D-Rohre bezeichnet. Im Vergleich zu einem kreisrunden Rundrohr, welches lediglich einen einzigen linienförmigen Auflagebereich aufweist, wird durch den grossflächigen Auflagebereich die Wärmeübertragung zwischen dem Fluid innerhalb des Rohrs und dem Innenbereich des Gebäudes über die Strahlplatte erhöht. Im Stand derTechnik bekannte Rohre sind z.B. in der EP 1 391 674 A offenbart.

### Darstellung der Erfindung

Bei den im Stand der Technik bekannten Rohren mit einem grossflächigen Auflagebereich besteht das Problem, dass es bei Druckbeaufschlagung des Fluides innerhalb des Rohrs zu einer Auswölbung des Rohrs kommen kann, sodass das Rohr keinen flächigen Auflagebereich mehr aufweist, sondern aufgrund der Auswölbung beispielsweise unregelmässig auf der Strahlplatte aufliegt oder sogar lediglich einen linienförmigen Auflagebereich aufweist, wie es bei gängigen kreisrunden Rundrohren üblich ist. Das Problem solcher Auswölbungen tritt vor allem dann auf, wenn leichte und relativ biegeflexible Materialien, insbesondere Wärmeleitfolien oder auch dünne Wärmeleitbleche verwendet werden, oder aber wenn Rohre mit geringen Wandstärken verwendet werden. Der Leichtbau ist generell erwünscht, da dadurch der Transport und die Montage signifikant erleichtert wird und Kosten eingespart werden können.

Es ist daher die allgemeine Aufgabe der vorliegenden Erfindung den Stand der Technik im Bereich Rohre für die Heiz- und Kühltechnik von Gebäuden weiterzuentwickeln und vorzugsweise die im Stand der Technik bekannten Nachteile ganz oder teilweise zu überwinden. In vorteilhaften Ausführungsformen der Erfindung wird dabei ein Rohr bereitgestellt, welches es ermöglicht, dass selbst bei hohen Drücken keine Auswölbungen auftreten, welche die Wärmeübertragung signifikant verringern.

In einem ersten Aspekt wird diese Aufgabe durch ein Rohr zum Transport eines wärmetragenden Fluides, insbesondere Wasser, gemäss dem unabhängigen Anspruch 1 gelöst. Das Rohr weist dabei einen sich in Rohrlängsrichtung erstreckenden ersten Auflagebereich und einen sich in Rohrlängsrichtung erstreckenden zweiten Auflagebereich auf. Der Fachmann versteht hierbei, dass sich die Rohrlängsrichtung in Fliessrichtung des Fluides erstreckt und somit die Erstreckungsrichtung des Rohrs definiert. Die Rohrlängsrichtung steht damit senkrecht zur Rohrquerrichtung und senkrecht zur Rohrquerschnittsfläche, d.h. der offenen Fläche des Rohrs. Das Rohr weist zudem eine zwischen dem ersten und zweiten Auflagebereich angeordneten, sich im Rohrquerschnitt nach innen gerichteten und sich in Rohrlängsrichtung erstreckende Wölbung auf. Nach innen gerichtet bedeutet dabei, dass sich die Wölbung im Rohrquerschnitt zum Mittelpunkt des Rohrs hin erstreckt, bzw. dass die Wölbung zur Umgebung hin konkav, bzw. vom Inneren des Rohrs aus gesehen konvex, ausgebildet ist. Im Rohrquerschnitt weist die Wölbung daher typischerweise einen nach innen gerichteten Scheitelpunkt auf. Der Fachmann versteht, dass der Rohrquerschnitt senkrecht zur Rohrlängsrichtung verläuft. Durch die beiden Auflagebereiche wird der Verlust der Wärmeübertragung im Vergleich zu einem abgeflachten Rohr mit grossflächiger Auflagefläche minimiert. Zudem wird zwischen den beiden Auflagebereichen ein Luftpolster eingeschlossen, welches im Betrieb die Temperatur des wärmetragenden Fluides aufnimmt und daher zur Wärmeübertragung beiträgt. Die nach innen gerichtete Wölbung verhindert jedoch grösstenteils, dass bei Druckbeaufschlagung eine Auswölbung entsteht und, selbst für den Fall, dass eine solche Auswölbung entsteht, steht dem Rohr ausreichend Spiel zur Verfügung, sodass sich die Wölbung zum Druckausgleich flächig an eine Strahlplatte anlegen kann.

Der erste und zweite Auflagebereich und die Wölbung können sich dabei in Rohrlängsrichtung entlang der gesamten Länge, d.h. der Ausdehnung in Rohrlängsrichtung, des Rohrs erstrecken oder auch nur über einen Teil, beispielsweise über mindestens 50%, mindestens 60%, mindestens 75%, mindestens 85%, mindestens 90% oder mindestens 95% der Rohrgesamtlänge. Es versteht sich, dass der erste und zweite Auflagebereich voneinander durch die Wölbung, räumlich getrennt, bzw. zueinander beabstandet angeordnet sind.

In einigen Ausführungsformen sind der erste und zweite Auflagebereich im Rohrquerschnitt konkav zum Rohrinneren, bzw. konvex zur äusseren Rohrumgebung, ausgebildet.

Generell können mehrere Rohre miteinander zu einem Rohrregister verbunden werden.

Das Rohr ist typischerweise ein tubulärer Hohlkörper. In einigen Ausführungsformen ist die Wandstärke des Rohrs radial umlaufend im Wesentlichen konstant. Somit die Wandstärke im Bereich der Wölbung gleich dick wie in einem anderen Bereich des Rohrs.

In einigen Ausführungsformen kann die Wölbung wellenförmig ausgebildet sein.

In einigen Ausführungsformen besteht das Rohr aus Metall, insbesondere Kupfer oder Edelstahl.

In einigen Ausführungsformen erstreckt sich der erste und zweite Auflagebereich jeweils linienförmig entlang der Rohrlängsrichtung. Der Term «linienförmig» kann dabei die Form einer geraden oder eine geschwungene Linie bezeichnen.

In einigen Ausführungsformen ist das Rohr im Rohrquerschnitt symmetrisch zu einer entlang der Rohrlängsrichtung verlaufenden Symmetrieebene ausgebildet. Die Symmetrieebene ist dabei typsicherweise senkrecht zum Rohrquerschnitt angeordnet und verläuft im Rohrquerschnitt durch den Scheitelpunkt der Wölbung.

Das Rohr ist im Rohrquerschnitt in einem ersten Teilbereich seines Umfangs, jedoch nicht dem kompletten Umfang, rund ausgebildet und weist in diesem ersten Teilbereich im Rohrquerschnitt die Form eines Kreissegments auf.

In einigen Ausführungsformen weist das Rohr im Rohrquerschnitt einen sich an den ersten Teilbereich direkt anschliessenden zweiten Teilbereich auf. Dieser zweite Teilbereich ist im Rohrquerschnitt im Vergleich zum ersten Teilbereich abgeflacht ausgebildet und umfasst den ersten und zweiten Auflagebereich und die nach innen gerichtete Wölbung. In bestimmten Ausführungsformen besteht der erste Teilbereich entlang dessen Umfangs ausschliesslich aus dem ersten Teilbereich und dem direkt daran anschliessenden zweiten Teilbereich.

In einigen Ausführungsformen beträgt der Radius des Kreissegments des ersten Teilbereichs 60% bis 90%, insbesondere 70% bis 80%, des maximalen Rohrdurchmessers. Der maximale Rohrdurchmesser bezeichnet die maximale lineare und direkte Distanz zwischen den Wänden des Rohrs zuzüglich der jeweiligen Wandstärken. Somit ist der maximale Rohrdurchmesser ein Aussendurchmesser des Rohrs.

Der maximale Rohrdurchmesser verläuft typischerweise im Rohrquerschnitt entlang einer Geraden, welche das Rohr in den ersten und zweiten Teilbereich aufteilt. An den Schnittpunkten dieser Geraden treffen somit der erste und zweite Teilbereich aufeinander.

In einigen Ausführungsformen beträgt der maximale Rohrdurchmesser 8 mm bis 18 mm, insbesondere 10 mm bis 15 mm.

Die Höhe des ersten Teilbereichs, also dessen vertikale Ausdehnung, entspricht 40% bis 80%, insbesondere 60% bis 70%, der Gesamthöhe des Rohrs. Die Gesamthöhe bezeichnet dabei im montierten Zustand die vertikale Ausdehnung, inklusive der Wandstärken, des Rohrs vor der Oberfläche der Trägerkassette aus. Die Gesamthöhe steht typischerweise senkrecht zur oben erwähnten Geraden entlang welcher der maximale Rohrdurchmesser verläuft.

In einigen Ausführungsformen weist das Rohr zusätzlich einen sich in Rohrlängsrichtung erstreckenden dritten Auflagebereich und eine weitere im Rohrquerschnitt nach innen gerichtete und sich in Rohrlängsrichtung erstreckenden Wölbung auf. Dabei ist der dritte Auflagebereich zwischen dem ersten und zweiten Auflagebereich und direkt zwischen den beiden Wölbungen angeordnet. Somit sind sowohl die beiden Wölbungen als auch der dritte Auflagebereich zwischen dem ersten und zweiten Auflagebereich angeordnet, jedoch nur der dritte Auflagebereich zwischen den beiden Wölbungen. Derartige Ausführungsformen sind vorteilhaft, weil sie die Wärmeübertragung, sowie die Stabilität des Rohrs gegenüber Druckbeaufschlagung des darin befindlichen Fluides, verbessern. Die oben beschriebenen Eigenschaften und Merkmale der Wölbung, bzw. des ersten und zweiten Auflagebereichs, gelten zudem optional auch für die weitere Wölbung, bzw. für den dritten Auflagebereich.

In einigen Ausführungsformen kann das Rohr bereichsweise im Rohrquerschnitt im Wesentlichen eine w- oder eine ε-Form aufweisen.

In einigen Ausführungsformen ist die Wölbung, und optional die weitere Wölbung, derart ausgebildet, dass im Rohrquerschnitt die Wölbung an ihrem Scheitelpunkt durch einen Krümmungskreis beschrieben wird, wobei der Krümmungskreisradius 30% bis 70%, insbesondere 40% bis 60% des maximalen Rohrdurchmessers beträgt.

Die Wandstärke des Rohrs kann in einigen Ausführungsformen 0.3 mm bis 0.6 mm, insbesondere 0.3 mm bis 0.5 mm, betragen.

In einigen Ausführungsformen befinden sich der erste und zweite Auflagebereich auf gleicher Höhe, insbesondere entlang der vertikalen Ausdehnung des Rohrs, d.h. typischerweise senkrecht zur Geraden entlang welcher der maximale Rohrdurchmesser verläuft.

In einigen Ausführungsformen kann der Versatz, insbesondere der vertikale Versatz der Wölbung, im Vergleich zum ersten und/oder zweiten Auflagebereich, d.h. die Distanz im Rohrquerschnitt zwischen dem nach innen gerichteten Scheitelpunkt der Wölbung und dem ersten, bzw. zweiten Auflagebereich, 1 % bis 4%, insbesondere 1 % bis 2% der Gesamthöhe des Rohrs betragen. Hierdurch kann der Verlust der Wärmeübertragung durch die Wölbung geringgehalten werden, wobei gleichzeitig die Wölbung ausreichend ausgebildet ist, um Auswölbungen aufgrund von Druckbeaufschlagung zu verhindern.

In einem zweiten Aspekt der Erfindung wird die allgemeine Aufgabe durch ein Rohrregister gelöst, insbesondere ein mäanderförmiges Rohrregister, welches ein oder mehrere Rohre nach einem der Ausführungsformen des ersten Aspekts der Erfindung umfasst.

In einem dritten Aspekt der Erfindung wird die allgemeine Aufgabe durch ein Wärmeaustauschelement umfassend ein Rohrregister, insbesondere ein mäanderförmiges Rohrregister, mit mindestens einem Rohr nach einem der Ausführungsformen des ersten Aspekts der Erfindung, gelöst. Hierbei ist das mindestens eine Rohr mittels einem das Rohr teilweise umgebenden Wärmeleitblech an einerTrägerkassette derart befestigt, dass der erste und zweite Auflagebereich des mindestens einen Rohrs direkt auf der Trägerkassette aufliegt und ein Hohlraum zwischen der Wölbung und der Trägerkassette bereitgestellt wird. Dieser Hohlraum wird dabei jeweils vom ersten und zweiten Auflagebereich lateralseitig begrenzt. Vorzugsweise liegt das Rohr dabei nur mit dem ersten und zweiten Auflagebereich, und optional dem dritten Auflagebereich, direkt auf der Trägerkassette auf. Die Trägerkassette kann dabei typischerweise eine Platte umfassen und/oder flächig ausgebildet sein.

Die Trägerkassette besteht bevorzugt aus Metall. Vorzugsweise wird als Trägerkassette eine Blechkassette verwendet.

Ein Blech wie es in der vorliegenden Offenbarung verwendet wird hat eine maximale Dicke von weniger als 4.75 mm, insbesondere von weniger als 3.00 mm.

Das Wärmeleitblech kann in einigen Ausführungsformen kraftschlüssig, formschlüssig und/oder stoffschlüssig, insbesondere mittels eines Haftvermittlers oder auch durch Verschweissen, mit der Trägerkassette verbunden, bzw. an dieser befestigt sein.

Das Wärmeleitblech kann dabei das mindestens eine Rohr kraftschlüssig und/oder formschlüssig an der Trägerkassette befestigen.

Das Wärmeleitblech kann in einigen Ausführungsformen aus Metall bestehen, insbesondere aus Aluminium.

Vorzugsweise weist das Wärmeleitblech eine Dicke von 0.5 mm bis 1 mm, insbesondere von 0.5 mm bis 0.8 mm auf.

Das Wärmeleitblech kann in einigen Ausführungsformen das Rohr entlang der gesamten Länge des Rohrs entlang der Rohrlängsachse, oder zumindest entlang 50%, zumindest 60%, entlang 75%, entlang 80%, entlang 90% oder entlang 95% der gesamten Länge des Rohrs entlang der Rohrlängsachse umgeben.

In einigen Ausführungsformen umgibt das Wärmeleitblech im Querschnitt das Rohr entlang dessen Umfangs Omega-förmig, d.h. Ω-förmig. Eine derartige Form erhöht die Effizienz der Wärmeübertragung und verstärkt zusätzlich die Befestigung des Rohrs an der Trägerkassette.

In einigen Ausführungsformen umgibt das Wärmeleitblech das Rohrentlang dessen Umfangs zur Erhöhung der Effizienz der Wärmeübertragung, insbesondere zumindest teilweise, derart, dass es im Querschnitt ein Kreissegment mit einem Bogenmass von 3.14 rad bis 4.5 rad, insbesondere von 3.14 rad bis 3.85 rad beschreibt.

In einem vierten Aspekt der Erfindung wird die allgemeine Aufgabe durch ein Verfahren zur Herstellung eines Wärmeaustauschelements, insbesondere eines Wärmeaustauschelements nach einem der Ausführungsformen des dritten Aspekts, gelöst. Das Verfahren umfasst dabei die Schritte:
a. Einlegen eines Wärmeleitblechs in ein Formwerkzeug mit rinnenförmiger, insbesondere im Querschnitt gerundeter, Ausnehmung und optionales Anpassen der Form des Wärmeleitblechs an die Form der Ausnehmung;
b. Anschliessendes Anordnen eines Rohrs auf dem Wärmeleitblech;
c. Pressen des auf dem Wärmeleitblech angeordneten Rohrs mit einer Presse, derart, dass das Rohr zumindest in einem Rohr einen sich in Rohrlängsrichtung erstreckenden ersten Auflagebereich und einen sich in Rohrlängsrichtung erstreckenden zweiten Auflagebereich mit einer zwischen dem ersten und zweiten Auflagebereich angeordneten, sich im Rohrquerschnitt nach innen gerichteten und sich in Rohrlängsrichtung erstreckenden Wölbung aufweist und derart, dass das Rohr (1) im Rohrquerschnitt in einem ersten Teilbereich (11) seines Umfangs rund, insbesondere kreisrund, ausgebildet ist und die Form eines Kreissegments aufweist und der erste Teilbereich eine Höhe (H1) von 40% bis 80% der Gesamthöhe (Hₜₒₜ) des Rohrs (1) aufweist;
d. Öffnen der Presse und Anordnen einer Trägerkassette auf dem gepressten Rohr aus Schritt c. und erneutes Pressen zur Herstellung eines Wärmeaustauchelements.

Im Schritt c. kann die Presse insbesondere eine Ausbuchtung aufweisen, die dazu ausgelegt ist, die Wölbung des Rohrs auszubilden. Alternativ kann diese auch durch lateralseitige Krafteinwirkung beim Pressen ausgebildet werden.

In einigen Ausführungsformen weist das Wärmeleitblech insbesondere vor Schritt c. oder vor Schritt b., eine Klebeschicht auf oder es wird vor dem Pressen in Schritt d. ein Haftvermittler auf das Wärmeleitblech und/oder auf die Trägerkassette aufgebracht.

Eine Klebeschicht bezeichnet dabei eine Schicht, welche an sich klebende Eigenschaften aufweist und daher durch Anpressen an eine Gegenfläche eine Klebeverbindung ausbilden kann, ohne dass vorgängig zusätzlicher Haftvermittler aufgebracht werden muss.

### Kurze Erläuterung der Figuren

Anhand der in den nachfolgenden Figuren gezeigten Ausführungsbeispielen und der dazugehörigen Beschreibung werden Aspekte der Erfindung näher erläutert.
- Figur 1: zeigt einen Querschnitt eines erfindungsgemässen Rohrs gemäss einer Ausführungsform der Erfindung;
- Figur 2: zeigt eine schematische Sicht auf ein erfindungsgemässes Wärmeaustauschelement gemäss einer Ausführungsform der Erfindung;
- Figur 3: zeigt einen Querschnitt eines erfindungsgemässen Wärmeaustauschelement gemäss einer Ausführungsform der Erfindung.

### Wege zur Ausführung der Erfindung

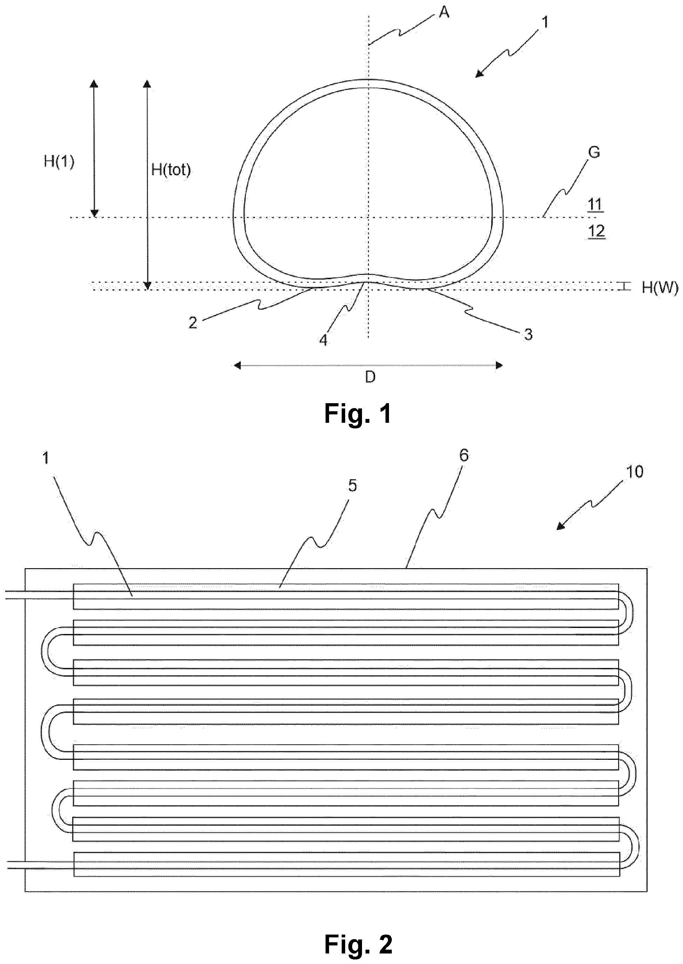

In der Figur 1 ist ein erfindungsgemässes Rohr 1 im Rohrquerschnitt gezeigt. Das Rohr ist dabei ein tubulärer Rohrkörper. Die Rohrwand umgibt dabei peripher umlaufend das Rohrinnere und begrenzt dabei das Rohrinnere. Der Schnitt ist dabei senkrecht zur Rohrlängsrichtung ausgebildet. Das Rohr 1 weist dabei den ersten Auflagebereich 2 und den zweiten Auflagebereich 3 auf, welche konkav zum Rohrinneren, bzw. konvex zur äusseren Umgebung des Rohrs ausgebildet sind. Zudem weist das Rohr die nach innen, d.h. ins Rohrinnere hin gerichtete, Wölbung 4 auf. Sowohl der erste und zweite Auflagebereich als auch die Wölbung erstrecken sich dabei in Rohrlängsrichtung, also zum Betrachter hin, bzw. vom Betrachter weg. Erkennbar ist zudem, dass die Wölbung 4 im Rohrquerschnitt zwischen dem ersten Auflagebereich 2 und dem zweiten Auflagebereich 3 angeordnet ist. Das Rohr 1 ist in der gezeigten Ausführungsform symmetrisch zu einer entlang der Rohrlängsrichtung verlaufenden Symmetrieebene A (in der 2D Darstellung der Fig. 1 als gestrichelte Linie A gezeigt) ausgebildet, welche durch den Scheitelpunkt der Wölbung 4 verläuft. Das gezeigte Rohr hat einen maximalen Rohrdurchmesser D, was generell einen Aussendurchmesser bezeichnet, und welcher entlang der Geraden G verläuft. Die Gesamthöhe H(tot) des Rohrs 1 ist die vertikale Ausdehnung des Rohrs und ist in der gezeigten Ausführungsform senkrecht zur Geraden G angeordnet. Die Gerade G teilt dabei das Rohr 1 in den ersten Teilbereich 11 und den zweiten Teilbereich 12 ein, welche direkt aneinander anschliessen. Das Rohr 1 ist dabei entlang seines Umfangs im ersten Teilbereich 11 rund ausgebildet und weist in diesem ersten Teilbereich 11 im Rohrquerschnitt die Form eines Kreissegments auf. Im zweiten Teilbereich 12 ist das Rohr 1 im Vergleich zum ersten Teilbereich 11 im Rohrquerschnitt abgeflacht ausgebildet. Dabei sind der erste und zweite Auflagebereich 2, 3 und die nach innen gerichtete Wölbung 4 im zweiten Teilbereich 12 angeordnet. Der erste Teilbereich 11 hat dabei eine Höhe H(1), welche in der gezeigten Ausführungsform dem Radius des Kreissegments entspricht, von beispielsweise 40% bis 80% des Gesamthöhe H(tot). Der Versatz H(W) der Wölbung 4 im Vergleich zum ersten und/oder zweiten Auflagebereich 2, 3 beträgt dabei 1 % bis 4% der Gesamthöhe H(tot) des Rohrs 1.

In der Figur 2 ist ein erfindungsgemässes Wärmeaustauschelement 10 mit mehreren erfindungsgemässen Rohren 1 (nur eines der Rohre ist zum Zweck der Deutlichkeit mit einem Bezugszeichen versehen), welche zu einem mäanderförmigen Rohrregister verbunden sind, dargestellt. Hierbei ist das mindestens eine Rohr 1 mittels einem das Rohr teilweise umgebenden Wärmeleitblech 5 an einer flächigen Trägerkassette 6 derart befestigt, dass der erste und zweite Auflagebereich des mindestens einen Rohrs direkt auf der Trägerkassette 6 aufliegt und ein Hohlraum zwischen der Wölbung und der Trägerkassette bereitgestellt wird. Vergleichsmessungen zu einem Rohr mit einem einzigen grossflächigen Auflagebereich (ein s.g. D-Rohr), haben ergeben, dass die direkte Wärmeübertragung zwischen Rohr und Trägerkassette bei dem erfindungsgemässen Wärmeaustauschelement lediglich um 12% verringert ist. Im Vergleich zu einem gängigen kreisrunden Rundrohr mit nur einem einzigen linienförmigen Auflagebereich, verbessert sich die Wärmeübertragung bei dem erfindungsgemässen Wärmeaustauschelement um 18%. Es hat sich jedoch herausgestellt, dass bei der Betrachtung der gesamten Wärmeübertragung, d.h. nicht nur der direkten Übertragung zwischen Rohr und Trägerkassette, sondern zusätzlich auch via dem Wärmeleitblech, im Vergleich zu einer Ausführungsform mit einem D-Rohr, eine faktisch identische Wärmeübertragung beobachtet wird, da die geringere direkte Wärmeübertragung auf andere Weise, nämlich via dem Wärmeleitblech auf die Trägerkassette übertragen wird.

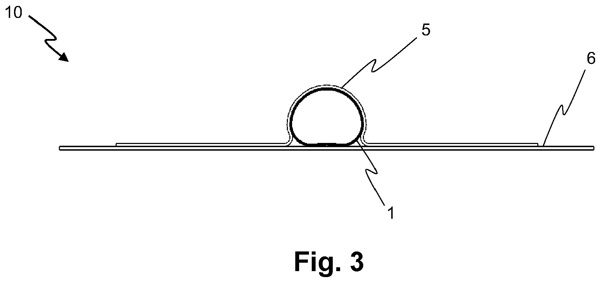

Figur 3 zeigt einen Querschnitt eines erfindungsgemässes Wärmeaustauschelement 10 mit Rohr 1, welches vom Wärmeleitblech im Querschnitt, bzw. im Rohrquerschnitt Omega-förmig umgeben wird und mittels dem Wärmeleitblech an der flächigen Trägerkassette 6 befestigt ist.

## Patentansprüche

1. Rohr (1) zum Transport eines wärmetragenden Fluides, insbesondere Wasser, wobei das Rohr (1) einen sich in Rohrlängsrichtung erstreckenden ersten Auflagebereich (2) und einen sich in Rohrlängsrichtung erstreckenden zweiten Auflagebereich (3) mit einer zwischen dem ersten und zweiten Auflagebereich angeordneten, sich im Rohrquerschnitt nach innen gerichteten und sich in Rohrlängsrichtung erstreckenden Wölbung (4) aufweist, wobei das Rohr (1) im Rohrquerschnitt in einem ersten Teilbereich (11) seines Umfangs rund, insbesondere kreisrund, ausgebildet ist und die Form eines Kreissegments aufweist, **dadurch gekennzeichnet, dass** der erste Teilbereich eine Höhe (H1) von 40% bis 80% der Gesamthöhe (Hₜₒₜ) des Rohrs (1) aufweist.

2. Rohr (1) nach Anspruch 1, wobei sich der erste und zweite Auflagebereich (2, 3) jeweils linienförmig entlang der Rohrlängsrichtung erstreckt.

3. Rohr (1) nach einem der 1 oder 2 Ansprüche, wobei das Rohr (1) im Rohrquerschnitt symmetrisch zu einer entlang der Rohrlängsrichtung verlaufenden Symmetrieebene (A) ausgebildet ist.

4. Rohr (1) nach einem der vorherigen Ansprüche, wobei das Rohr (1) im Rohrquerschnitt einen sich an den ersten Teilbereich (11) direkt anschliessenden zweiten Teilbereich (12) aufweist, wobei der zweite Teilbereich (12) im Rohrquerschnitt im Vergleich zum ersten Teilbereich (11) abgeflacht ausgebildet ist und wobei der zweite Teilbereich (12) den ersten und zweiten Auflagebereich (2, 3) und die nach innen gerichtete Wölbung (4) umfasst.

5. Rohr (1) nach einem der vorherigen Ansprüche, wobei der Radius des Kreissegments des ersten Teilbereichs (11) 60% bis 90%, insbesondere 70% bis 80%, des maximalen Rohrdurchmessers beträgt.

6. Rohr (1) nach einem der vorherigen Ansprüche, wobei der Radius des Kreissegments des ersten Teilbereichs 40% bis 80%, insbesondere 60% bis 70%, der Gesamthöhe des Rohrs (1) entspricht.

7. Rohr (1) nach einem der vorherigen Ansprüche, wobei das Rohr (1) zusätzlich einen sich in Rohrlängsrichtung erstreckenden dritten Auflagebereich und eine weitere im Rohrquerschnitt nach innen gerichtete und sich in Rohrlängsrichtung erstreckenden Wölbung aufweist, wobei der dritte Auflagebereich zwischen dem ersten und zweiten Auflagebereich (2, 3) und direkt zwischen den beiden Wölbungen angeordnet ist.

8. Rohr (1) nach einem der vorherigen Ansprüche, wobei die Wölbung (4) derart ausgebildet ist, dass im Rohrquerschnitt die Wölbung (4) an ihrem Scheitelpunkt durch einen Krümmungskreis beschrieben wird, wobei der Krümmungskreisradius 30% bis 70%, insbesondere 40% bis 60%, des maximalen Rohrdurchmessers beträgt.

9. Rohrregister, insbesondere mäanderförmiges Rohrregister, umfassend ein oder mehrere Rohre (1) nach einem der vorherigen Ansprüche.

10. Wärmeaustauschelement (10) umfassend ein Rohrregister, insbesondere ein mäanderförmiges Rohrregister, mit mindestens einem Rohr (1) nach einem der Ansprüche 1 bis 9, wobei das Rohr (1) mittels einem das Rohr teilweise umgebenden Wärmeleitblech (5) an einer Trägerkassette (6) derart befestigt ist, dass der erste und zweite Auflagebereich (2, 3) des mindestens einen Rohrs (1) direkt auf der Trägerkassette (6) aufliegt und ein Hohlraum zwischen der Wölbung (4) und der Trägerkassette (6) bereitgestellt wird.

11. Wärmeaustauschelement (10) nach Anspruch 10, wobei das Wärmeleitblech (5) im Querschnitt das Rohr (1) entlang dessen Umfangs Omega-förmig umgibt.

12. Wärmeaustauschelement (10) nach Anspruch 10 oder 11, wobei das Wärmeleitblech (5) das Rohr (1) entlang dessen Umfangs derart umgibt, dass es im Querschnitt ein Kreissegment mit einem Bogenmass von 3.14 rad bis 4.5 rad, insbesondere von 3.14 rad bis 3.85 rad beschreibt.

13. Verfahren zur Herstellung eines Wärmeaustauschelements (10), insbesondere eines Wärmeaustauschelements (10) nach einem der Ansprüche 11 bis 13, umfassend die Schritte:
a. Einlegen eines Wärmeleitblechs (5) in ein Formwerkzeug mit rinnenförmiger, insbesondere im Querschnitt abgerundeter, Ausnehmung und optionales Anpassen der Form des Wärmeleitblechs (5) an die Form der Ausnehmung
b. Anschliessendes Anordnen eines Rohrs (1) auf dem Wärmeleitblech;
c. Pressen des auf dem Wärmeleitblech (5) angeordneten Rohrs (1) mit einer Presse, derart, dass das Rohr (1) zumindest in einem Rohr (1) einen sich in Rohrlängsrichtung erstreckenden ersten Auflagebereich (2) und einen sich in Rohrlängsrichtung erstreckenden zweiten Auflagebereich (3) mit einer zwischen dem ersten und zweiten Auflagebereich angeordneten, sich im Rohrquerschnitt nach innen gerichteten und sich in Rohrlängsrichtung erstreckenden Wölbung (4) aufweist und derart, dass das Rohr (1) im Rohrquerschnitt in einem ersten Teilbereich (11) seines Umfangs rund, insbesondere kreisrund, ausgebildet ist und die Form eines Kreissegments aufweist und der erste Teilbereich eine Höhe (H1) von 40% bis 80% der Gesamthöhe (Hₜₒₜ) des Rohrs (1) aufweist;
d. Öffnen der Presse und Anordnen einer Trägerkassette (6) auf dem gepressten Rohr (1) aus Schritt c. und erneutes Pressen zur Herstellung eines Wärmeaustauchelements (10).

14. Verfahren nachAnspruch 13, wobei das Wärmeleitblech (5) eine Klebeschicht aufweist oder wobei vor dem Pressen in Schritt d. ein Haftvermittler auf das Wärmeleitblech (5) und/oder auf die Trägerkassette (6) aufgebracht wird.

## Claims

1. Pipe (1) for transporting a heat-carrying fluid, in particular water, wherein the pipe (1) has a first support region (2) extending in the longitudinal direction of the pipe and a second support region (3) extending in the longitudinal direction of the pipe with a bulge (4) arranged between the first and second support regions, inwardly directed in the pipe cross-section and extending in the longitudinal direction of the pipe, the pipe (1) being in a first partial region (11) of its circumference round, in particular circular, and having the shape of a circular segment, **characterized in that** the first partial region has a height (H1) of 40% to 80% of the total height (Hₜₒₜ) of the pipe (1).

2. Pipe (1) according to claim 1, wherein the first and second support regions (2, 3) each extend in a line along the longitudinal direction of the pipe.

3. Pipe (1) according to one of the 1 or 2 claims, wherein the pipe (1) is formed symmetrically in the pipe cross-section with respect to a plane of symmetry (A) extending along the longitudinal direction of the pipe.

4. Pipe (1) according to one of the previous claims, wherein the pipe (1) has a second partial region (1 2) in the pipe cross-section which is directly adjacent to the first partial region (11), wherein the second partial region (12) is flattened in the pipe cross-section compared to the first partial region (11) and wherein the second partial region (12) comprises the first and second support regions (2, 3) and the inwardly directed bulge (4).

5. Pipe (1) according to one of the previous claims, wherein the radius of the circular segment of the first partial region (11) is 60% to 90%, in particular 70% to 80%, of the maximum pipe diameter.

6. Pipe (1) according to one of the previous claims, wherein the radius of the circular segment of the first partial region corresponds to 40% to 80%, in particular 60% to 70%, of the total height of the pipe (1).

7. Pipe (1) according to one of the previous claims, wherein the pipe (1) additionally has a third support region extending in the longitudinal direction of the pipe and a further bulge directed inwardly in the pipe cross-section and extending in the longitudinal direction of the pipe, wherein the third support region is arranged between the first and second support regions (2, 3) and directly between the two bulges.

8. Pipe (1) according to one of the preceding claims, wherein the bulge (4) is formed in such a way that in the pipe cross-section the bulge (4) is described at its vertex by a circle of curvature, wherein the radius of the circle of curvature is 30% to 70%, in particular 40% to 60%, of the maximum pipe diameter.

9. Pipe register, in particular a meander-shaped pipe register, comprising one or a plurality of pipes (1) according to one of the preceding claims.

10. Heat exchange element (10) comprising a pipe register, in particular a meander-shaped pipe register, with at least one pipe (1) according to one of claims 1 to 9, wherein the pipe (1) is fastened to a support cassette (6) by means of a heat conducting plate (5) partially surrounding the pipe in such a way that the first and second support regions (2, 3) of the at least one pipe (1) rest directly on the support cassette (6) and a cavity is provided between the bulge (4) and the support cassette (6).

11. Heat exchange element (10) according to claim 10, wherein the heat conducting plate (5) surrounds the pipe (1) in cross-section along its circumference in an omega shape.

12. Heat exchange element (10) according to claim 10 or 11, wherein the heat conducting plate (5) surrounds the pipe (1) along its circumference in such a way that in cross-section it describes a circular segment with a radian measure of 3.14 rad to 4.5 rad, in particular of 3.14 rad to 3.85 rad.

13. A method for producing a heat exchange element (10), in particular a heat exchange element (10) according to any one of claims 11 to 13, comprising the steps of:
a. Inserting a heat conducting plate (5) into a forming tool with a trough-shaped recess, in particular with a rounded cross-section, and optionally adapting the shape of the heat conducting plate (5) to the shape of the recess
b. Subsequently arranging a pipe (1) on the heat conducting plate;
c. Pressing of the pipe (1) arranged on the heat conducting plate (5) with a press in such a way that the pipe (1) has, at least in one pipe (1), a first support region (2) extending in the longitudinal direction of the pipe and a second support region (3) extending in the longitudinal direction of the pipe with a bulge (4) arranged between the first and second support regions, inwardly directed in the pipe cross-section and extending in the longitudinal direction of the pipe and in such a way that the pipe (1) is round, in particular circular, in a first partial region (11) of its circumference and has the shape of a circular segment and the first partial region has a height (H1) of 40% to 80% of the total height (Hₜₒₜ) of the pipe (1);
d. Opening the press and arranging a support cassette (6) on the pressed pipe (1) from step c. and pressing again to produce a heat exchanger element (10).

14. Method according to claim 13, wherein the heat conducting plate (5) has an adhesive layer or wherein an adhesion promoter is applied to the heat conducting plate (5) and/or to the support cassette (6) before pressing in step d..

## Revendications

1. Tube (1) pour le transport d'un fluide caloporteur, en particulier de l'eau, le tube (1) présentant une première région d'appui (2) s'étendant dans la direction longitudinale du tube et une deuxième région d'appui (3) s'étendant dans la direction longitudinale du tube avec une courbure (4) disposée entre la première et la deuxième région d'appui, dirigée vers l'intérieur dans la section transversale du tube et s'étendant dans la direction longitudinale du tube, le tube (1) étant réalisé rond, en particulier circulaire, dans la section transversale du tube dans une première région partielle (11) de sa périphérie et présentant la forme d'un segment de cercle, **caractérisé en ce que** la première région partielle présente une hauteur (H1) de 40% à 80% de la hauteurtotale (Hₜₒₜ) du tube (1).

2. Tube (1) selon la revendication 1, dans lequel la première et la deuxième région d'appui (2, 3) s'étendent chacune de manière d'une ligne le long de la direction longitudinale du tube.

3. Tube (1) selon l'une des revendications 1 ou 2, le tube (1) étant réalisé dans la section transversale du tube de manière symétrique par rapport à un plan de symétrie (A) s'étendant le long de la direction longitudinale du tube.

4. Tube (1) selon l'une des revendications précédentes, le tube (1) présentant dans la section transversale du tube une deuxième région partielle (12) directement adjacente à la première région partielle (11), la deuxième région partielle (12) étant réalisée aplatie dans la section transversale du tube par rapport à la première région partielle (11), et la deuxième région partielle (12) comprenant la première et la deuxième région d'appui (2, 3) et la courbure (4) dirigée vers l'intérieur.

5. Tube (1) selon l'une quelconque des revendications précédentes, dans lequel le rayon du segment de cercle de la première région partielle (11) est compris entre 60% et 90%, en particulier entre 70% et 80%, du diamètre maximal du tube.

6. Tube (1) selon l'une quelconque des revendications précédentes, dans lequel le rayon du segment de cercle de la première région partielle correspond à 40% à 80%, en particulier à 60% à 70%, de la hauteur totale du tube (1).

7. Tube (1) selon l'une des revendications précédentes, le tube (1) présentant en outre une troisième région d'appui s'étendant dans la direction longitudinale du tube et une autre courbure dirigée vers l'intérieur dans la section transversale du tube et s'étendant dans la direction longitudinale du tube, la troisième région d'appui étant agencée entre la première et la deuxième région d'appui (2, 3) et directement entre les deux courbures.

8. Tube (1) selon l'une des revendications précédentes, la courbure (4) étant réalisée de telle sorte que, dans la section transversale du tube, la courbure (4) est décrite à son sommet par un cercle de courbure, le rayon du cercle de courbure représentant de 30% à 70%, en particulier de 40% à 60%, du diamètre maximal du tube.

9. Registre tubulaire, en particulier registre tubulaire en forme de méandres, comprenant un ou plusieurs tubes (1) selon l'une quelconque des revendications précédentes.

10. Élément d'échange de chaleur (10) comprenant un registre tubulaire, en particulier un registre tubulaire en forme de méandres, avec au moins un tube (1) selon l'une des revendications 1 à 9, le tube (1) étant fixé sur une cassette de support (6) au moyen d'une tôles thermoconductrices (5) entourant partiellement le tube de telle sorte que la première et la deuxième région d'appui (2, 3) du au moins un tube (1) reposent directement sur la cassette de support (6) et qu'une cavité soit mise à disposition entre la courbure (4) et la cassette de support (6).

11. Élément d'échange de chaleur (10) selon la revendication 10, dans lequel la section transversale des tôles thermoconductrices (5) entoure le tube (1) en forme d'oméga le long de sa périphérie.

12. Élément d'échange de chaleur (10) selon la revendication 10 ou 11, dans lequel la tôle thermoconductrice (5) entoure le tube (1) le long de sa périphérie de telle sorte qu'elle décrit en section transversale un segment de cercle avec une mesure d'arc de 3.14 rad à 4.5 rad, en particulier de 3.14 rad à 3.85 rad.

13. Procédé de fabrication d'un élément d'échange de chaleur (10), en particulier d'un élément d'échange de chaleur (10) selon l'une quelconque des revendications 11 à 13, comprenant les étapes consistant à :
a. Mettre en place d'une tôle thermoconductrice (5) dans un outil de forme avec un évidement en forme de gouttière, en particulier arrondi en section transversale, et adaptation optionnelle de la forme de la tôle thermoconductrice (5) à la forme de l'évidement.
b. Ensuite, agencer d'un tube (1) sur la tôle thermoconductrice ;
c. Presser le tube (1) disposé sur la tôle thermoconductrice (5) avec une presse, de telle sorte que le tube (1) présente au moins dans un tube (1) une première région d'appui (2) s'étendant dans la direction longitudinale du tube et une deuxième région d'appui (3) s'étendant dans la direction longitudinale du tube avec une courbure disposée entre la première et la deuxième région d'appui, (4) dirigée vers l'intérieur dans la section transversale du tube et s'étendant dans la direction longitudinale du tube, et de telle sorte que le tube (1), dans la section transversale du tube, est réalisé rond, en particulier circulaire, dans une première région partielle (11) de sa périphérie et présente la forme d'un segment de cercle, et la première région partielle présente une hauteur (H1) de 40% à 80% de la hauteurtotale (Hₜₒₜ) du tube (1) ;
d. Ouvrir la presse et agencer une cassette de support (6) sur le tube pressé (1) de l'étape c. et presser à nouveau pour produire un élément d'échange thermique (10).

14. Procédé selon la revendication 13, dans lequel la tôle thermoconductrice (5) présente une couche adhésive ou dans lequel un promoteur d'adhérence est appliqué sur la tôle thermoconductrice (5) et/ou sur la cassette de support (6) avant le pressage à l'étape d.
